(19) **Europäisches Patentamt / European Patent Office / Office européen des brevets**

(11) **EP 1 954 074 B1**

(12) **EUROPEAN PATENT SPECIFICATION**

(45) Date of publication and mention of the grant of the patent:
**11.05.2011 Bulletin 2011/19**

(51) Int Cl.:
***H04W 4/06*** *(2009.01)*

(21) Application number: **06805183.8**

(22) Date of filing: **08.11.2006**

(86) International application number:
**PCT/CN2006/002986**

(87) International publication number:
**WO 2007/054019 (18.05.2007 Gazette 2007/20)**

(54) **TERMINAL MEASURE METHOD AND USER TERMINAL**

ENDGERÄTEMESSVERFAHREN UND BENUTZERENDGERÄT

PROCEDE DE MESURE DE TERMINAL ET TERMINAL UTILISATEUR

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.11.2005 CN 200510117675**

(43) Date of publication of application:
**06.08.2008 Bulletin 2008/32**

(73) Proprietor: **Huawei Technologies Co., Ltd.**
**Longgang District, Shenzhen**
**Guangdong 518129 (CN)**

(72) Inventor: **YIN, Liyan**
**Guangdong 518129 (CN)**

(74) Representative: **Haley, Stephen**
**Gill Jennings & Every LLP**
**The Broadgate Tower**
**20 Primrose Street**
**London EC2A 2ES (GB)**

(56) References cited:
**EP-A2- 1 509 056    CN-A- 1 177 266**
**CN-A- 1 404 339    CN-A- 1 464 665**

- **"Universal Mobile Telecommunications System (UMTS); User Equipment (UE) procedures in idle mode and procedures for cell reselection in connected mode (3GPP TS 25.304 version 6.7.0 Release 6); ETSI TS 125 304" ETSI STANDARDS, LIS, SOPHIA ANTIPOLIS CEDEX, FRANCE, vol. 3-R2, no. V6.7.0, 1 September 2005 (2005-09-01), XP014031922 ISSN: 0000-0001**
- **SIEMENS: "Measurement requirements in conjunction with MBMS reception in different RRC states" 3GPP DRAFT; R4-040635, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG4_Radio\TSGR4_33\Docs, no. Yokohama, Japan; 20041115, 11 November 2004 (2004-11-11), XP050173401**
- **"3rd Generation Partnership Project; Technical Specification Group Radio Access Network; Introduction of the Multimedia Broadcast Multicast Service (MBMS) in the Radio Access Network (Stage-2); (Release 6)" 3RD GENERATION PARTNERSHIP PROJECT (3GPP); TECHNICAL SPECIFICATION (TS), XX, XX, vol. TS 25.346, no. V2.6.0, 1 February 2004 (2004-02-01), page 49pp, XP007902770**
- **"Universal Mobile Telecommunications System (UMTS); Requirements for support of radio resource management (FDD) (3GPP TS 25.133 version 6.12.0 Release 6); ETSI TS 125 133", ETSI STANDARDS, LIS, SOPHIA ANTIPOLIS CEDEX, FRANCE, vol. 3-R4, no. V6.12.0, 1 December 2005 (2005-12-01), XP014032538, ISSN: 0000-0001**

**Description**

**Field of the Invention**

The present invention relates to cell reselection and broadcast/multicast technology in the 3rd generation (3G) mobile communication system, and in particular, to a method and user equipment (UE) for cell reselection and measurement.

**Background of the Invention**

The Universal Mobile Telecommunications System (UMTS) is a 3G mobile communication system that adopts the Wideband Code Division Multiple Access (WCDMA) air interface technology. The UMTS mainly develops in the 3rd Generation Partnership Project (3GPP), the global standardization organization for WCDMA and Global System for Mobile communications (GSM).

To fully utilize mobile communication network resources, the 3G mobile communication system incorporates the concepts of multicast and broadcast. The service of multicast and broadcast is a technology that transmits same data from one data source to multiple destinations. Hence, the 3GPP proposes the Multimedia Broadcast-Multicast Service (MBMS). MBMS is a point-to-multipoint service for transmitting same data from one data source to multiple UEs in a mobile communication network, thus achieving sharing of network resources and increasing the utilization of network resources, especially air interface resources.

To ensure efficient utilization of MBMS resources, the conception of an MBMS preferred frequency layer is included in 3GPP specifications. The UMTS Terrestrial Radio Access Network (UTRAN) requires that a UE receiving a specific type of MBMS should select a preferred frequency layer, on which the UTRAN will transmit the MBMS. The preferred frequency layer for each MBMS is indicated by the UTRAN to UEs. A UE receiving MBMS should reside in the cell of the preferred frequency layer indicated by the UTRAN. This is the frequency layer convergence processing of the UE. To guarantee mobility, the UE performs cell reselection when receiving MBMS. When the reception of MBMS is over, the UE attempts to return to the previous frequency cell or select a frequency cell at random to reside.

The UE reselects a cell among cells measured according to applicable measurement criterions. The cell reselected must fulfill the following conditions (hereinafter "mandatory conditions for cell reselection" all refer to these conditions):

(a) Rank measured cells that fulfill Criterion S (described below) and certain conditions (described below) according to receive (Rx) quality criterion, the R criterion (described below):

(b) If the conditions below are all fulfilled, the UE reselects the best cell (the cell with the highest R value based on an R criterion computation) among the ranked cells:

(1) The R value of a measured new cell obtained by the R criterion computation is always above the R value of the current serving cell of the UE within a specified time interval;

(2) The UE has resided in the current serving cell for more than 1 second.

The aforesaid "certain conditions" for cells to participate the ranking process are changed according to whether the current serving cell of the UE uses a hierarchical cell structure (HCS):

If the HCS is not used, all cells measured by the UE that fulfill the Criterion S are ranked according to the R criterion;

If the HCS is used:

When the UE is in low-mobility, the UE shall perform ranking of all cells that fulfill the criterion S according to the R criterion among all measured cells, that have the highest HCS priority among those cells that fulfill H≥0.; if no cell fulfill H≥0, the UE shall

perform ranking of all cells that fulfill the criterion S according to the R criterion among all measured cells;

When the UE is in high-mobility, for all cells measured by the UE that fulfill the Criterion S:

(1) If any cells fulfilling H≥0 have a lower HCS priority than the current serving cell of the UE, cells with the highest HCS priority among those that fulfill H≥0 and have a lower HCS priority than the current serving cell of the UE are selected and ranked according to the R criterion;

(2) If any cells fulfilling H≥0 have an HCS priority higher than or equal to the HCS priority of the current serving cell of the UE, cells with the lowest HCS priority among those that fulfill H≥0 and have the HCS priority higher than or equal to the HCS priority of the current serving cell of the UE are selected and ranked according to the R criterion;

(3) If there is no cell fulfilling H≥0, all cells measured by the UE that fulfill the Criterion S are ranked according to the R criterion.

The aforesaid Criterion S is fulfilled when:

for FDD cells: Srxlev > 0 and Squal > 0

for TDD cells: Srxlev > 0

for GSM cells: Srxlev > 0

Where:

$$Squal = Q_{qualmeas} - Qqualmin$$

$$Srxlev = Q_{rxlevmeas} - Qrxlevmin - Pcompensation$$

The meanings of parameters in the above formulas are listed in the table below:

| Squal | Cell selection quality, applicable only for FDD cells |
|---|---|
| Srxlev | Cell selection Rx level value |
| $Q_{qualmeas}$ | Measured cell quality value, applicable only for FDD cells |
| $Q_{rxlevmeas}$ | Measured cell RX level value |
| Qqualmin | Minimum required quality level in the cell applicable only for FDD cells |
| Qrxlevmin | Minimum required Rx level in the cell |
| Pcompensation | Max(UE_TXPWR_MAX_RACH-P_MAX. 0) |
| UE_TXPWR_MAX_RA CH | Maximum TX power level an UE may use when accessing the cell on RACH |
| P_MAX | Maximum RF output power of the UE |

The aforesaid H criterion is fulfilled when:

$$H_s = Q_{meas,s} - Qhcs_s$$

$$H_n = Q_{meas,n} - Qhcs_n - TO_n \times L_n$$

The R criterion is defined by:

$$R_s = Q_{meas,s} + Qhyst_s + Qoffmbms$$

$$R_n = Q_{meas,n} - Qoffset_{s,n} + Qoffmbms - TO_n \times (1 - L_n)$$

The meanings of parameters in the above formulas are as follows:

$R_s$: Rx quality of the current serving cell of the UE;

$R_n$: Rx quality of an neighboring cell of the UE.

$Q_{meas}$: The quality value of the received signal derived from the averaged CPICH Ec/No or CPICH RSCP for FDD cells, from the averaged P-CCPCH RSCP for TDD cells and from the averaged received signal level for GSM cells. $Q_{meas,s}$ is the $Q_{meas}$ of the current serving cell of the UE and $Q_{meas,n}$ is the $Q_{meas}$ of an neighboring cell of the UE.

$Qhcs_s$ and $Qhcs_n$: quality threshold levels for cell reselection when the HCS is in use, where $Qhcs_s$ is applicable to the current serving cell of the UE and $Qhcs_n$ is applicable to an neighboring cell of the UE: $Qhcs$, and $Qhcs_n$ are sent by a UMTS Terrestrial Radio Access Network (UTRAN) through broadcast.

$Qhyst_s$: hysteresis value, sent by the UTRAN through broadcast.

$Qoffset_{s,n}$: offset between the current serving cell of the UE and an neighboring cell, sent by the UTRAN through broadcast.

$Qoffmbms$: additional offset of a cell in the MBMS preferred frequency layer, including the current serving cell and neighboring cells of the UE, sent by the UTRAN through broadcast.

Where:

$TO_n = TEMP\_OFFSET_n \times W (PENALTY\_TIME_n - T_n)$:

$L_n = 0$ if $HCS\_PRIO_n = HCS\_PRIO_s$;

$L_n = 1$ if $HCS\_PRIO_n <> HCS\_PRIO_s$; (<> means not equal to)

$W(x) = 0$ for $x < 0$;

$W(x) = 1$ for $x \geq 0$,

where x is the result of $PENALTY\_TIME_n - T_n$.

In the above formulas:

HCS_PRIO: HCS priority of a cell, sent by the UTRAN through broadcast, where $HCS\_PRIO_s$ is the HCS priority of the current serving cell of the UE and $HCS\_PRIO_n$ is the HCS priority of an neighboring cell of the UE.

$TEMP\_OFFSET_n$: offset applied to the H and R criterion for a neighboring cell within $PENALTY\_TIME_n$, sent by the UTRAN through broadcast.

PENALTY_TIMEn: time duration for which the TEMPORARY_OFFSETn is applied for a neighboring cell, sent by the UTRAN through broadcast.

$TEMP\_OFFSET_n$ and $PENALTY\_TIME_n$ are applicable only when a system informatio indicates that the HCS is used.

$TEMP\_OFFSET_n$ is applicable only when the $T_n$ timer is started. One $T_n$ timer is started for each neighboring cell.

If the HCS priority of an neighboring cell of the UE is not equal to that of the current serving cell of the UE, $Q_{meas,n}$ is larger than $Qhcs_n$; if HCS priority of an neighboring cell of the UE is equal to that of the current serving cell of the UE, $Q_{meas,n}$ is larger than ($Q_{meas,s}$ + $Qoffset_{s,n}$), and $T_n$ is started from 0. Tn for the neighboring cell shall be stopped as soon as any of the above conditions are no longer fulfilled. So long as $T_n$ is running, the computation result of $TO_n$ is correct; otherwise, $TO_n$ is set to 0.

If the neighboring cell associated with $T_n$ is no longer an neighboring cell of the new serving cell of the UE, or if parameters of the new serving cell of the UE do not fulfill the above two conditions, $T_n$ stops; if the neighboring cell associated with $T_n$ is still an neighboring cell of the new serving cell of the UE, $T_n$ continues running.

When the current serving cell of the UE does not fulfill the R criterion, the UE measures all neighboring cells and reselects a cell based on the mandatory conditions for cell reselection among the measured cells; if the UE fails to reselect and reside in a proper cell within a specific time (12 ms if the UE is in the idle, CELL_PCH, URA_PCH or CELL_DCH state; 4 ms if the UE is in the CELL_FACH state), the UE loses the serving cell by default, searches for cells fulfilling the Criterion S and reselects to reside in the cell with the highest S value.

In the prior art, when the current serving cell of the UE does not fulfill the Criterion S, cell reselection is performed in the following procedure:

> The UE receives system measurement control information from the UTRAN, and measures the Rx quality of the current serving cell of the UE according to the received system measurement control information;
> The UE judges whether the current serving cell of the UE fulfills the Criterion S according to the measurement result;
> If the UE determines that the current serving cell does not fulfill the Criterion S, the UE measures all neighboring cells;
> When the UE reselects a cell in the preferred frequency layer among measured cells based on the mandatory conditions for cell reselection, the additional offset Qoffmbms should be used in the computation;
> The UE finds a cell fulfilling the mandatory conditions according to the above processing and reselects to reside in the cell.

According to the above processing, if the current serving cell of the UE does not fulfill the Criterion S, the additional offset Qoffmbms is used for the computation in cell reselection in the case of a cell in the preferred frequency layer. In practice, however, a cell reselected through this method does not always have the best Rx quality. As a result, when the UE continues receiving MBMS or other services in the new cell, the Rx quality is not good enough.

In addition, when cell reselection is performed in the above method, if the current serving cell of the UE is in the preferred frequency layer, and the current serving cell of the UE does not fulfill the Criterion S, the MBMS reception of the UE will be ended. Then, the UE will attempt to return to the previous frequency cell or select to reside in a frequency cell at random. In this case, it is meaningless for the UE to still use Qoffmbms to perform a computation on a cell in the preferred frequency layer before reselecting a cell.

ETSI TS 125 304 v6.7.0 (2005-09) discloses UMTS UE procedures for cell reselection in connected mode. 3GPP TSG RAN WG4 (Radio) Meeting #33 presented measurements requirements in conjunction with MBMS reception in different RRC states. 3GPP TS 25.346 v2.6.0 (2004-02) discusses MBMS in the radio access network. The document SIEMENS: "Measurement requirements in conjunction with MBMS reception in different RRC states" 3GPP DRAFT; R-040635, of November 11 2004, discloses using MBMS specific S-criterion threshold parameters for triggering when measurements by the UE should be made in order to minimise the time during which the UE cannot receive MBMS information.

The present invention proposes a method and user equipment (UE) to make it meaningful for a UE in reception of Multimedia Broadcast-Multicast Service (MBMS) information to perform cell reselection and guarantee the performance of receiving the MBMS information.

Accordingly, the present invention also proposes a method and UE for performing measurements to guarantee measurement performance while assuring performance of receiving the MBMS information.

For the above purpose, the technical solution proposed by the present invention is as set out in claims 1 and 6. Embodiments of the present invention provide the following benefits:

According to an embodiment of the invention, in the method for cell reselection, a UE in reception of the MBMS information performs cell reselection as not in reception of the MBMS information, if the quality of the current serving cell of the UE is equal to or lower than a preset cell quality threshold. Thus, the UE in reception of MBMS can perform meaningful cell reselection and the performance in receiving MBMS is not degraded during cell reselection.

According to another embodiment of the invention, in the measurement method, a UE in reception of the MBMS information suspends the reception of the MBMS information and performs measurements if the quality of the current serving cell of the UE is equal to or lower than a preset cell quality threshold. Thus, during MBMS reception, the measurement performance is assured while the performance of MBMS reception is guaranteed.

In the Drawings:

Figure 1 is a schematic drawing of a method for cell reselection according to an embodiment of the invention;

Figure 2 is a diagram illustrating the structure of the first UE for cell reselection according to an embodiment of the invention;

Figure 3 is a schematic drawing of a method for performing measurements according to an embodiment of the invention;

Figure 4 shows a procedure for performing measurements according to an embodiment of the invention;

Figure 5 is a diagram illustrating the structure of the second UE for performing measurements according to an embodiment of the invention;

Figure 6 shows the structure of the second UE according to an embodiment of the invention; and

Figure 7 shows the structure of the second UE according to another embodiment of the invention.

The technical solution proposed by the present invention is intended to resolve the technical issue in the prior art. A method and user terminal (UE) for cell reselection is disclosed to enable a UE in reception of MBMS to perform meaningful cell reselection and guarantee the performance of MBMS reception during cell reselection.

The following details the embodiments of the present invention with reference to the accompanying drawings.

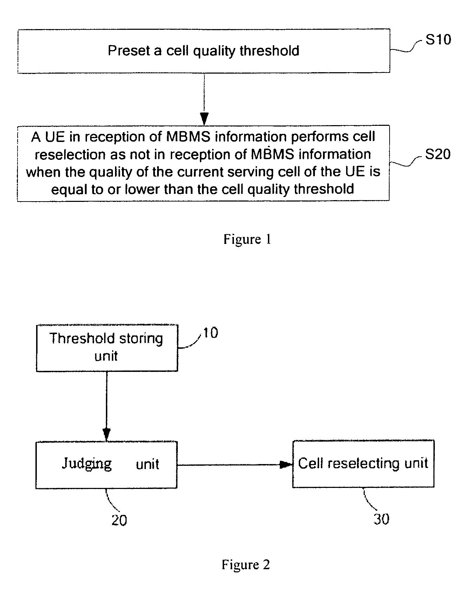

As shown in Figure 1, a method for cell reselection according to an embodiment of the invention includes:

S10: Preset a cell quality threshold, which may be but is not limited to:

a cell broadcast channel (CBCH) Rx quality threshold; or

a cell quality threshold applied to the Criterion S. Details of the Criterion S can be seen in the "Background of the Invention".

The preset cell quality threshold may be stored in a UE.

S20: A UE in reception of the MBMS information performs cell reselection as not in reception of the MBMS information, if the quality of the current serving cell of the UE is equal to or lower than the preset cell quality threshold.

If the preset cell quality threshold is a CBCH Rx quality threshold, the UE measures the Rx quality of the broadcast channel in the current serving cell of the UE, and compares the measured Rx quality value of the broadcast channel in the current serving cell with the preset CBCH Rx quality threshold to judge whether the Rx quality value of the broadcast channel in the current serving cell is equal to or lower than the preset CBCH Rx quality threshold.

If the preset cell quality threshold is a cell quality threshold applied to the Criterion S, the UE performs an Criterion S computation on the current serving cell of the UE, and compares the Criterion S based quality value of the current serving cell with the preset cell quality threshold applied to the Criterion S to judge whether the Criterion S based quality value of the current serving cell is equal to or lower than the cell quality threshold applied to the Criterion S.

In step S20, when the UE performs cell reselection as not in reception of the MBMS information, if the UE finds a cell fulfilling the mandatory conditions for cell reselection, the UE reselects and resides in the reselected cell. Later, in the reselected cell, the UE in reception of the MBMS information reselects to reside in a cell in the preferred frequency layer according to the MBMS preferred frequency layer information indicated by a UTRAN and continues receiving the MBMS information. Finally, after the UE finishes receiving the MBMS information in the cell of the preferred frequency layer, the UE attempts to return to the reselected cell or reselects to reside in a cell at random.

The MBMS information includes MBMS point-to-multipoint Traffic Channel (MTCH) information and/or MBMS point-to-multipoint Control Channel (MCCH) information.

In an embodiment of the invention, a procedure for cell reselection is disclosed as follows:

(1) A UE receives system measurement control information from a UTRAN, and measures the Rx quality of the current serving cell of the UE according to the received system measurement control information;

(2) The UE judges whether the quality of the current serving cell of the UE is lower than or equal to a preset cell quality threshold according to the measurement result;

(3) If the quality of the current serving cell of the UE is lower than or equal to a preset cell quality threshold, the UE in reception of MBMS abandons the use of MBMS configuration information, such as MBMS preferred frequency layer information, and the ongoing normal MBMS mobility action, such as frequency layer convergence or leaving the preferred frequency layer, but selects a proper cell to reside as not in reception of the MBMS information (i.e. the cell reselection method when the UE is not in reception of MBMS, which does not use the additional offset Qoffmbms in the computation for a cell in the preferred frequency layer);

(4) After the UE selects and resides in a proper cell, if the UE expects to continue receiving MBMS, the UE executes normal MBMS actions using the MBMS configuration information.

In accordance with the cell reselection method, the present invention discloses a UE. Figure 2 is a structure diagram of the UE according to an embodiment of the invention. The UE includes:

a threshold storing unit 10, adapted to store a preset cell quality threshold, which may be a CBCH Rx quality threshold or a cell quality threshold applied to the Criterion S;

a judging unit 20, adapted to judge whether the quality of a current serving cell of the UE is equal to or lower than the preset cell quality threshold stored in the threshold storing unit 10 when the UE is in reception of MBMS information;

if the preset cell quality threshold is a CBCH Rx quality threshold, the judging unit 20 measures the Rx quality of the broadcast channel in the current serving cell of the UE, and compares the measured Rx quality value of the broadcast channel in the current serving cell with the CBCH Rx quality threshold stored in the threshold storing unit 10 to judge whether the Rx quality value of the broadcast channel in the current serving cell is equal to or lower than the CBCH Rx quality threshold stored in the threshold storing unit 10;

if the preset cell quality threshold is a cell quality threshold applied to the Criterion S, the judging unit 20 performs an Criterion S computation on the current serving cell of the UE, and compares the Criterion S based quality value of the current serving cell with the cell quality threshold applied to the Criterion S stored in the threshold storing unit 10 to judge whether the Criterion S based quality value of the current serving cell is equal to or lower than the preset cell quality threshold applied to the Criterion S stored in the threshold storing unit 10;

a cell reselecting unit 30, adapted to perform cell reselection as the UE is not in reception of the MBMS information if the Criterion S based quality value of the current serving cell is equal to or lower than the preset cell quality threshold applied to the Criterion S stored in the threshold storing unit 10.

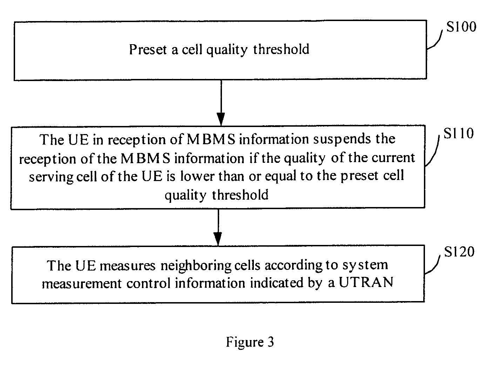

The technical implementation details of the UE are the same as or similar to the technical implementation details of the method for cell reselection. See related descriptions.
As shown in Figure 3, a method for performing measurements according to an embodiment of the invention includes:

S100: Preset a cell quality threshold in a UE, which may be but is not limited to:

a cell broadcast channel (CBCH) Rx quality threshold; or

a cell quality threshold applied to the Criterion S. Details of the Criterion S can be seen in the "Background of the Invention".

S110: The UE in reception of MBMS information suspends the reception of the MBMS information if the quality of the current serving cell of the UE is lower than or equal to the preset cell quality threshold.
If the preset cell quality threshold is a CBCH Rx quality threshold, the UE measures the Rx quality of the broadcast channel in the current serving cell of the UE, and compares the measured Rx quality value of the broadcast channel in the current serving cell with the preset CBCH Rx quality threshold to judge whether the Rx quality value of the broadcast channel in the current serving cell is equal to or lower than the preset CBCH Rx quality threshold.
If the preset cell quality threshold is a cell quality threshold applied to the Criterion S, the UE performs an Criterion S computation on the current serving cell of the UE, and compares the Criterion S based quality value of the current serving cell with the preset cell quality threshold applied to the Criterion S to judge whether the Criterion S based quality value of the current serving cell is equal to or lower than the preset cell quality threshold applied to the Criterion S.
S120: The UE measures neighboring cells according to system measurement control information indicated by a UTRAN.

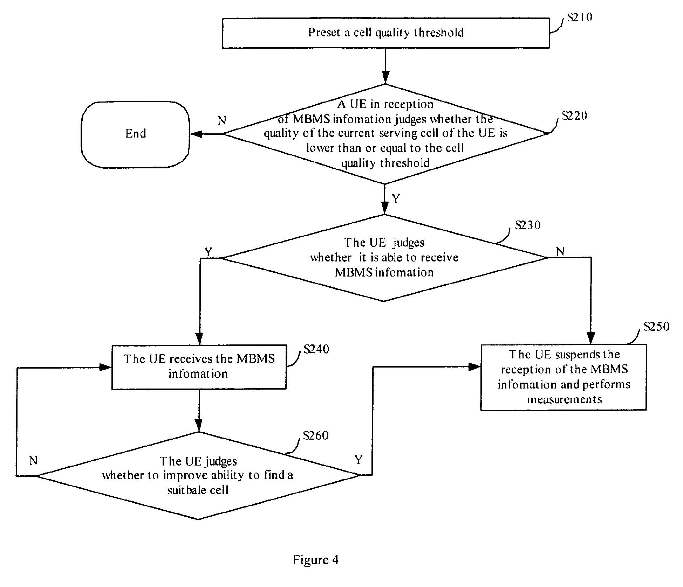

As shown in Figure 4, a procedure for performing measurements according to an embodiment of the invention includes:

S210: Preset a cell quality threshold in a UE.

S220: The UE in reception of MBMS information judges whether the quality of the current serving cell of the UE is equal to or lower than the preset cell quality threshold and, if the quality of the current serving cell of the UE is equal to or lower than the preset cell quality threshold, continues with step S230; otherwise, ends the processing.

S230: The UE judges whether the UE is able to continue receiving the MBMS information and if the UE is able to continue receiving the MBMS information, continues with step S240; otherwise, continues with step S250.

S240: The UE continues receiving the MBMS information and later executes step S260.

S250: The UE suspends the reception of the MBMS information and performs measurements.

S260: The UE judges whether to improve ability to find a suitable cell, and if it is determined to improve ability to find a suitable cell, goes back to step S250; otherwise, goes back to step S240.

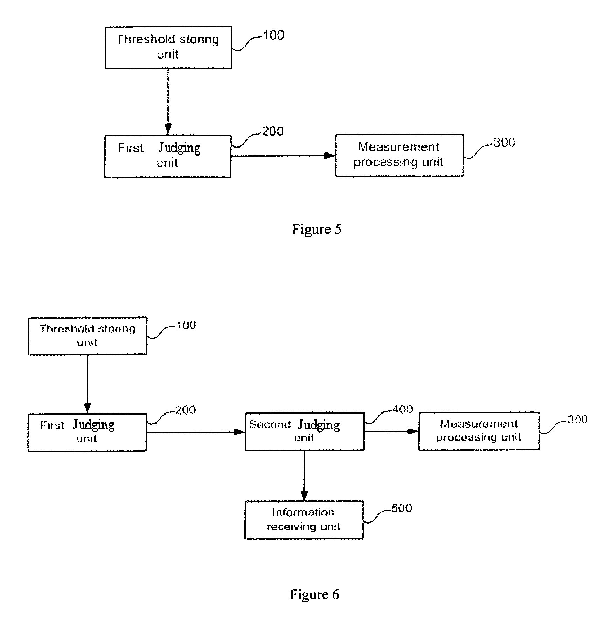

The MBMS information includes MBMS point-to-multipoint Traffic Channel (MTCH) information and/or MBMS point-to-multipoint Control Channel (MCCH) information.
The measurement process in the above method includes intra-frequency measurement and/or inter-frequency measurement or inter-system measurement.
The above embodiment of the measurement method includes two instances: in the first instance, if the quality of the current serving cell of the UE is equal to or lower than the preset cell quality threshold, the UE is sure to suspend the reception of the MBMS information and measure cells (including intra-frequency and inter-frequency measurement or inter-system measurements); in the second instance, if the quality of the current serving cell of the UE is equal to or lower than the preset cell quality threshold, the UE may suspend the reception of the MBMS information and measure cells. The second instance is intended to guarantee that the UE is able to receive the MBMS information if the quality of the current serving cell of the UE does not reach the preset cell quality threshold. Moreover, in the second scenario, a trigger condition for the UE to suspend the reception of the MBMS information is that the UE triggers the suspending of reception of the MBMS information for the purpose of enhancing the cell search capability.
In accordance with the measurement method, the present invention discloses another UE. Figure 5 is a structure diagram of the UE according to an embodiment of the invention. The UE includes:

a threshold storing unit 100, adapted to store a preset cell quality threshold;
a first judging unit 200, adapted to judge whether the quality of a current serving cell of the UE is equal to or lower than the preset cell quality threshold stored in the threshold storing unit 100 when the UE is in reception of MBMS information; and
a measurement processing unit 300, adapted to suspend the reception of the MBMS information and perform inter-frequency measurement or inter-system measurements on inter-frequency/inter-system cells, if the quality of a current serving cell of the UE is equal to or lower than the preset cell quality threshold stored in the threshold storing unit 100.

Figure 6 shows the structure of the second UE according to an embodiment of the invention. On the basis of Figure 6, the UE further includes:

a second judging unit 400, adapted to judge whether the UE is able to continue receiving MBMS information, if the quality of a current serving cell of the UE is equal to or lower than the preset cell quality threshold stored in the threshold storing unit 100; and

an information receiving unit 500, adapted to select to continue receiving the MBMS information, if the UE is able to continue receiving the MBMS information.

The measurement processing unit 300 selects to suspend the reception of the MBMS information and perform measurements, if the UE is unable to continue receiving the MBMS information.

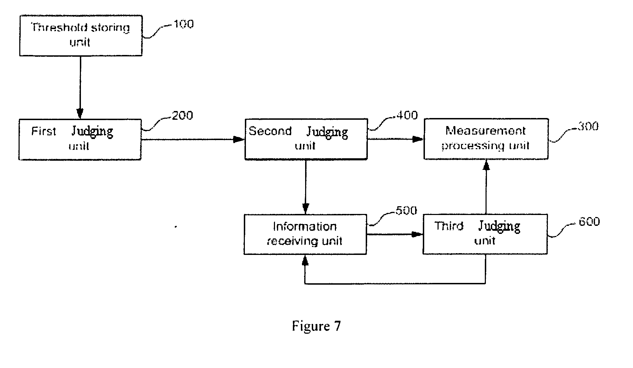

Figure 7 shows the structure of the second UE according to another embodiment of the invention. On the basis of Figure 6, the UE further includes: a third judging unit 600, adapted to judge whether the UE needs to improve ability to find a suitable cell when the information receiving unit 500 continues receiving MBMS information. The measurement processing unit 300 selects to suspend the reception of the MBMS information and perform measurements, if the UE needs to improve ability to find a suitable cell. The information receiving unit 500 selects to continue receiving the MBMS information if the UE does not need to improve ability to find a suitable cell.

The technical implementation details of the UE are the same as or similar to the technical implementation details of the method for performing measurements. See related descriptions.

It is apparent that those skilled in the art can make various modifications and variations to the present invention without departing from the scope of the present invention. The present invention is intended to cover these modifications and variations provided that they fall in the scope of protection defined by the following claims.

**Claims**

1.  A method for performing measurements, **characterised by** comprising the steps of:

    suspending (S110,S220,S250) the reception of Multimedia Broadcast-Multicast Service, MBMS, information by a user equipment, UE, in reception of the MBMS information if the quality of a current serving cell of the UE is equal to or lower than a preset cell quality threshold; and
    performing (S250) measurements by the UE,
    wherein the preset cell quality threshold is a cell quality threshold applied to a Criterion S; and the quality of the current serving cell of the UE is a cell quality value of the current serving cell based on the Criterion S and obtained by the UE from performing the Criterion S computation on the current serving cell of the UE.

2.  The method of claim 1, before the step of suspending the reception of MBMS information, further comprising the step of:

    judging (S230) whether the UE is able to continue receiving the MBMS information and, if the UE is unable to continue receiving the MBMS information, suspending (S250) the reception of the MBMS information and performing measurements.

3.  The method of claim 2, further comprising the step of:

    judging (S260) whether to improve ability to find a suitable cell if the UE receives the MBMS information and, if the UE is determined to improve ability to find a suitable cell, suspending (S250) the reception of the MBMS information and performing measurements.

4.  The method of any of claims 1 to3, wherein, the MBMS information is:

    MBMS point-to-multipoint Traffic Channel, MTCH, information; and/or
    MBMS point-to-multipoint Control Channel, MCCH, information.

5.  The method of any of claims 1 to 3, wherein the measurements comprise:

    intra-frequency measurement; and/or
    inter-frequency measurement or inter-system measurement.

6.  A user equipment, UE, comprising:

    a first judging unit (200), adapted to judge whether the quality of a current serving cell of the UE is equal to or lower than a preset cell quality threshold stored in a threshold storing unit if the UE is in reception of Multimedia Broadcast-Multicast Service, MBMS, information; and
    a measurement processing unit (300), adapted to suspend reception of the MBMS information if the quality of a current serving cell of the UE is equal to or lower than the preset cell quality threshold, and perform measurements,
    wherein the preset cell quality threshold is a cell quality threshold applied to a Criterion S; and the quality of the current serving cell of the UE is a cell quality value of the current serving cell based on the Criterion S and obtained by the UE from performing the Criterion S computation on the current serving cell of the UE.

**7.** The user equipment, UE, of claim 6 further comprising:

a third judging unit (600), adapted to judge whether the UE needs to improve ability to find a suitable cell when an information receiving unit (500) continues receiving the MBMS information;
the measurement processing unit (300) adapted to suspend the reception of the MBMS information and perform measurements if the UE needs to improve ability to find a suitable cell; and
the information receiving unit (500) adapted to receive the MBMS information if the UE does not need to improve ability to find a suitable cell.

**Patentansprüche**

**1.** Verfahren zum Durchführen von Messungen, **dadurch gekennzeichnet, dass** es die folgenden Schritte umfasst:

Suspendieren (S110, S220, S250) des Empfangs von Informationen des Multimedia Broadcast-Multicast Service MBMS durch ein Benutzergerät UE beim Empfang der MBMS-Informationen, wenn die Güte einer aktuellen versorgenden Zelle des UE kleiner oder gleich einer voreingestellten Zellengüteschwelle ist; und
Durchführen (S250) von Messungen durch das UE,
wobei die voreingestellte Zellengüteschwelle eine Zellengüteschwelle ist, die auf ein Kriterium S angewandt wird; und die Güte der aktuellen versorgenden Zelle des UE ein Zellengütewert der aktuellen versorgenden Zelle auf der Basis des Kriteriums S ist und durch das UE aus der Durchführung der Berechnung des Kriteriums S an der aktuellen versorgenden Zelle des UE erhalten wird.

**2.** Verfahren nach Anspruch 1, das vor dem Schritt des Suspendierens des Empfangs von MBMS-Informationen ferner den folgenden Schritt umfasst:

Beurteilen (S230), ob das UE in der Lage ist, weiter die MBMS-Informationen zu empfangen, und wenn das UE nicht in der Lage ist, weiter die MBMS-Informationen zu empfangen, Suspendieren (S250) des Empfangs der MBMS-Informationen und Durchführen von Messungen.

**3.** Verfahren nach Anspruch 2, das ferner den folgenden Schritt umfasst:

Beurteilen (S260), ob die Fähigkeit, eine geeignete Zelle zu finden, zu verbessern ist, wenn das UE die MBMS-Informationen empfängt, und wenn von dem UE bestimmt wird, die Fähigkeit, eine geeignete Zelle zu finden, zu verbessern, Suspendieren (S250) des Empfangs der MBMS-Informationen und Durchführen von Messungen.

**4.** Verfahren nach einem der Ansprüche 1 bis 3, wobei es sich bei den MBMS-Informationen um Folgendes handelt:

Informationen des Traffic Channel des MBMS von Punkt zu Mehrpunkt MTCH; und/oder
Informationen des Control Channel des MBMS von Punkt zu Mehrpunkt MCCH.

**5.** Verfahren nach einem der Ansprüche 1 bis 3, wobei die Messungen Folgendes umfassen:

Intra-Frequenz-Messung; und/oder
Inter-Frequenz-Messung oder Inter-System-Messung.

**6.** Benutzergerät UE, umfassend:

eine erste Beurteilungseinheit (200), die dafür ausgelegt ist zu beurteilen, ob die Güte einer aktuellen versorgenden Zelle des UE kleiner oder gleich einer voreingestellten Zellengüteschwelle ist, die in einer Schwellenspeichereinheit gespeichert wird, wenn das UE gerade Informationen des Multimedia Broadcast-Multicast Service MBMS empfängt; und
eine Messungsverarbeitungseinheit (300), die dafür ausgelegt ist, den Empfang der MBMS-Informationen zu suspendieren, wenn die Güte einer aktuellen versorgenden Zelle des UE kleiner oder gleich der voreingestellten Zellengüteschwelle ist, und Messungen durchzuführen,
wobei die voreingestellte Zellengüteschwelle eine Zellengüteschwelle ist, die auf ein Kriterium S angewandt wird, und die Güte der aktuellen versorgenden Zelle des UE ein Zellengütewert der aktuellen versorgenden Zelle auf der Basis des Kriteriums S ist und durch das UE aus der Durchführung der Berechnung des Kriteriums S an der aktuellen versorgenden Zelle des UE erhalten wird.

**7.** Benutzergerät UE nach Anspruch 6, ferner umfassend:

eine dritte Beurteilungseinheit (600), die dafür ausgelegt ist zu beurteilen, ob das UE die Fähigkeit, eine geeignete Zelle zu finden, verbessern muss, wenn eine Informationsempfangseinheit (500) weiter die MBMS-Informationen empfängt;

die Messungsverarbeitungseinheit (300), die dafür ausgelegt ist, den Empfang der MBMS-Informationen zu suspendieren und Messungen durchzuführen, wenn das UE die Fähigkeit, eine geeignete Zelle zu finden, verbessern muss; und

die Informationsempfangseinheit (500), die dafür ausgelegt ist, die MBMS-Informationen zu empfangen, wenn das UE die Fähigkeit, eine geeignete Zelle zu finden, nicht verbessern muss.

**Revendications**

**1.** Procédé permettant d'effectuer des mesures, **caractérisé en ce qu'**il comprend les étapes consistant à :

suspendre (S110, S220, S250) la réception d'informations d'un service de radiodiffusion et de multidiffusion multimédia, MBMS, par un équipement utilisateur, UE, lors de la réception des informations du service MBMS, si la qualité d'une cellule de desserte en cours de l'équipement utilisateur UE est inférieure ou égale à un seuil préétabli de qualité de cellule, et

effectuer (S250) des mesures grâce à l'équipement utilisateur UE,

dans lequel le seuil préétabli de qualité de cellule est un seuil de qualité de cellule appliqué à un critère S, et la qualité de la cellule de desserte en cours de l'équipement utilisateur UE est une valeur de qualité de cellule de la cellule de desserte en cours sur la base du critère S, et elle est obtenue par l'équipement utilisateur UE à partir de l'exécution d'un calcul du critère S sur la cellule de desserte en cours de l'équipement utilisateur UE.

**2.** Procédé selon la revendication 1, comprenant en outre , avant l'étape consistant à suspendre la réception d'informations du service MBMS, l'étape consistant à :

évaluer (S230) si l'équipement utilisateur UE est capable de poursuivre la réception des informations du service MBMS et, si l'équipement utilisateur UE n'est pas capable de poursuivre la réception des informations du service MBMS, suspendre (S250) la réception des informations du service MBMS et effectuer des mesures.

**3.** Procédé selon la revendication 2, comprenant en outre l'étape consistant à :

évaluer (S260) s'il faut améliorer la capacité à trouver une cellule appropriée si l'équipement utilisateur UE reçoit les informations du service MBMS et, s'il est déterminé que l'équipement utilisateur UE améliore sa capacité à trouver une cellule appropriée, suspendre (S250) la réception des informations du service MBMS et effectuer des mesures.

**4.** Procédé selon l'une quelconque des revendications 1 à 3, dans lequel les informations du service MBMS sont :

des informations sur un canal de trafic de point à multipoint du service MBMS, MTCH, et/ou des informations sur un canal de commande de point à multipoint du service MBMS, MCCH.

**5.** Procédé selon l'une quelconque des revendications 1 à 3, dans lequel les mesures comprennent :

une mesure intra-fréquence, et/ou une mesure inter fréquences ou une mesure inter systèmes.

**6.** Équipement utilisateur, UE, comprenant :

une première unité d'évaluation (200) conçue pour évaluer si la qualité d'une cellule de desserte en cours de l'équipement utilisateur UE est inférieure ou égale à un seuil préétabli de qualité de cellule mémorisé dans une unité de mémorisation de seuils si l'équipement utilisateur UE se trouve en réception d'informations d'un service de radiodiffusion et de multidiffusion multimédia, MBMS, et

une unité de traitement de mesure (300) conçue pour suspendre toute réception des informations du service MBMS si la qualité d'une cellule de desserte en cours de l'équipement utilisateur UE est inférieure ou égale au seuil préétabli de qualité de cellule, et pour effectuer des mesures,

dans lequel le seuil préétabli de qualité de cellule est un seuil de qualité de cellule appliqué à un critère S, et la qualité de la cellule de desserte en cours de l'équipement utilisateur UE est une valeur de qualité de cellule de la cellule de desserte en cours sur la base du critère S et elle est obtenue grâce à l'équipement utilisateur UE à partir de l'exécution d'un calcul du critère S sur la cellule de desserte en cours de l'équipement utilisateur UE.

7. Équipement utilisateur, UE, selon la revendication 6, comprenant en outre :

une troisième unité d'évaluation (600) conçue pour évaluer si l'équipement utilisateur UE a besoin d'améliorer sa capacité à trouver une cellule appropriée lorsqu'une unité de réception d'informations (500) poursuit la réception des informations du service MBMS,

l'unité de traitement de mesure (300) conçue pour suspendre la réception des informations du service MBMS et pour effectuer des mesures si l'équipement utilisateur UE a besoin d'améliorer sa capacité à trouver une cellule appropriée, et

l'unité de réception des informations (500) conçue pour recevoir les informations du service MBMS si l'équipement utilisateur UE n'a pas besoin d'améliorer sa capacité à trouver une cellule appropriée.

```
┌─────────────────────────────────────────────────┐
│                                                 │ ⟋ S10
│          Preset a cell quality threshold        │
│                                                 │
└─────────────────────────────────────────────────┘
                        │
                        ▼
┌─────────────────────────────────────────────────┐
│  A UE in reception of MBMS information performs cell │
│  reselection as not in reception of MBMS information │ ⟋ S20
│  when the quality of the current serving cell of the UE is │
│  equal to or lower than the cell quality threshold  │
└─────────────────────────────────────────────────┘
```

Figure 1

```
┌──────────────────────┐
│  Threshold storing   │ ⟋10
│        unit          │
└──────────────────────┘
            │
            ▼
┌──────────────────────┐        ┌──────────────────────┐
│  Judging    unit     │───────▶│  Cell reselecting unit │
└──────────────────────┘        └──────────────────────┘
          20                              30
```

Figure 2

```
┌──────────────────────────────────────────────────────────┐  ┐ S100
│                 Preset a cell quality threshold            │  /
└──────────────────────────────────────────────────────────┘  ⌡
                              │
                              ▼
┌──────────────────────────────────────────────────────────┐  ┐ S110
│     The UE in reception of MBMS information suspends the   │  /
│   reception of the MBMS information if the quality of the current │
│   serving cell of the UE is lower than or equal to the preset cell │
│                     quality threshold                      │
└──────────────────────────────────────────────────────────┘
                              │
                              ▼
┌──────────────────────────────────────────────────────────┐  ┐ S120
│     The UE measures neighboring cells according to system  │  /
│     measurement control information indicated by a UTRAN   │
└──────────────────────────────────────────────────────────┘
```

Figure 3

S210

Preset a cell quality threshold

A UE in reception
of MBMS infomation judges whether the
quality of the current serving cell of the UE is
lower than or equal to the cell
quality threshold

N

End

S220

Y

The UE judges
whether it is able to receive
MBMS infomation

S230

Y

N

The UE receives the MBMS
infomation

S240

The UE suspends the
reception of the MBMS
infomation and performs
measurements

S250

The UE judges
whether to improve ability to find a
suitbale cell

S260

N

Y

Figure 4

Threshold storing unit —100

First Judging unit —200 → Measurement processing unit —300

Figure 5

Threshold storing unit —100

First Judging unit —200 → Second Judging unit —400 → Measurement processing unit —300

Information receiving unit —500

Figure 6

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *ETSI TS 125 304 v6.7.0,* September 2005
- *3GPP TS 25.346 v2.6.0,* February 2004
- Measurement requirements in conjunction with MBMS reception in different RRC states. *3GPP DRAFT; R-040635,* 11 November 2004